(19) Europäisches Patentamt

European Patent Office

Office européen des brevets

(11) Veröffentlichungsnummer : **0 557 299 B1**

(12) **EUROPÄISCHE PATENTSCHRIFT**

(45) Veröffentlichungstag der Patentschrift :
03.08.94 Patentblatt 94/31

(51) Int. Cl.$^5$ : **B60K 41/06**

(21) Anmeldenummer : **91917799.8**

(22) Anmeldetag : **22.10.91**

(86) Internationale Anmeldenummer :
**PCT/DE91/00818**

(87) Internationale Veröffentlichungsnummer :
**WO 92/09448 11.06.92 Gazette 92/13**

(54) **VERFAHREN ZUM BETREIBEN EINER AUS BRENNKRAFTMASCHINE UND AUTOMATISCHEM GETRIEBE BESTEHENDEN ANTRIEBSEINHEIT.**

(30) Priorität : **23.11.90 DE 4037237**

(43) Veröffentlichungstag der Anmeldung :
**01.09.93 Patentblatt 93/35**

(45) Bekanntmachung des Hinweises auf die
Patenterteilung :
**03.08.94 Patentblatt 94/31**

(84) Benannte Vertragsstaaten :
**DE FR GB**

(56) Entgegenhaltungen :
**EP-A- 0 312 801**
**EP-A-02 030 735**
**DE-C- 3 632 965**
**US-A- 4 686 871**

(73) Patentinhaber : **ROBERT BOSCH GMBH**
**Postfach 30 02 20**
**D-70442 Stuttgart (DE)**

(72) Erfinder : **STREIB, Martin**
**Schiltacher Strasse 35**
**D-7000 Stuttgart 80 (DE)**

EP 0 557 299 B1

**Beschreibung**

**Verfahren zum Betreiben einer aus Brennkraftmaschine und automatischem Getriebe bestehenden Antriebseinheit**

Die Erfindung betrifft ein Verfahren zum Betreiben einer aus Brennkraftmaschine und automatischem Getriebe bestehenden Antriebseinheit, insbesondere für Kraftfahrzeuge, bei dem in Abhängigkeit von mehreren Parametern aufgrund eines Motormoments der Brennkraftmaschine und eines bestimmten Gangs des Getriebes ein Abtriebsmoment am Ausgang des Getriebes zur Verfügung gestellt wird. Dieses Abtriebsmoment wird dann den Rädern eines Fahrzeugs zugeleitet, so daß sich eine entsprechende Fahrzeugbewegung einstellt.

In bekannten Verfahren, bei denen Fahrzeuge mit einer elektronischen Motorleistungssteuerung (EMS = elektronisch einstellbare Drosselklappe) und elektronischer Getriebesteuerung wird über entsprechend programmierte Kennlinien oder Kennfelder das Motormoment der Brennkraftmaschine entsprechend der Fahrpedalstellung beeinflußt. Gleichzeitig wird von der Getriebesteuerung in Abhängigkeit von der Abtriebsdrehzahl und der Fahrpedal- beziehungsweise Drosselklappenstellung oder der Motorlast ein GangSollwert des Getriebes errechnet.

Das erfindungsgemäße Verfahren mit den im Hauptanspruch genannten Merkmalen geht davon aus, daß das Abtriebsmoment von der Fahrpedalstellung, also unabhängig von weiteren Einflußgrößen, wie zum Beispiel vom Betriebszustand des Getriebes, eingestellt wird. Mithin wird nicht -wie im oben beschriebenen Stand des Technik- über das Fahrpedal das Motormoment eingestellt, das letztlich zu einem entsprechenden Abtriebsmoment führt, sondern es erfolgt eine direkte Beeinflussung des Abtriebsmoment. Bei den bekannten Verfahren stellen sich bei den Fahrzeugen mit EMS und elektronischer Getriebesteuerung folgende Nachteile ein: Schaltet bei derartigen Fahrzeugen das Getriebe in einen anderen Gang, so wird sich bei konstanter Fahrpedalstellung aufgrund der sprungartig verändernden Drehmomentübersetzung das Abtriebsmoment sprungartig ändern. Aufgrund der durch den Gangwechsel veränderten Motordrehzahl stellt sich zwar in der Regel auch ein verändertes Motormoment ein, diese ungezielte Änderung kann jedoch den Übersetzungssprung im allgemeinen nicht kompensieren. Die Fahrzeuginsassen verspüren beim Schaltvorgang einen unvermeintlichen Ruck. Dieser wird zwar durch eine übliche Schaltruckdämpfung geglättet, ist jedoch stets wahrnehmbar. Das beschriebene Verfahren dagegen erlaubt es, daß das Abtriebsmoment nach dem Schaltvorgang dem Abtriebsmoment vor dem Schaltvorgang angeglichen ist, ohne daß es eines regelnden Eingriffs des Fahrers bedarf. Bei dem bekannten Verfahren des Standes der Technik führt eine kontinuierliche Änderung der Fahrpedalstellung zu einer ebenfalls kontinuierlichen Änderung des Abtriebsmoments, so lange kein Gangwechsel erfolgt. Wird aber eine vorzugsweise last- und drehzahlabhängige Schaltkennlinie überschritten, so wird sich das Abtriebsmoment und damit die Fahrzeugbeschleunigung aufgrund des sprunghaft verändernden Übersetzungsverhältnisses ebenfalls sprunghaft ändern, da das Motormoment nach dem Gangwechsel nicht gezielt beeinflußt wird. Überdies ist der Schlupf des automatischen Getriebes last- und drehzahlabhängig. Das Verfahren stellt dagegen sicher, daß das Motormoment unabhängig von dem gerade eingelegten Gang so eingestellt wird, daß der aus der Fahrpedalstellung und gegebenenfalls weiteren Parametern ermittelte Sollwert für das Abtriebsmoment am Getriebe eingehalten wird, sofern das verfügbare maximale Motormoment ausreicht. Der Fahrer gibt über das Fahrpedal nur das Abtriebsmoment (das die Fahrzeugbeschleunigung bestimmt) vor und hat keinen direkten Einfluß auf das Motormoment. Dies führt zu der Freiheit, die Kombination von Gangstufe des Getriebes und Motormoment nach verschiedenen Kriterien zu optimieren. So kann beispielsweise das geforderte Abtriebsmoment mit möglichst langer Übersetzung und großem Motormoment realisiert werden (guter Wirkungsgrad). Erst wenn das in der längsten Übersetzung erforderliche Motormoment über den Möglichkeiten der Brennkraftmaschine liegt, wird eine kürzere Übersetzung gewählt. Bei herkömmlichen Getriebesteuerungen wird dagegen -je nach Schaltprogramm- schon weit unterhalb der Motorvollast in den nächst niedrigeren Gang geschaltet, was zwar den Abtriebsmomentensprung nach dem Schalten verringert und das Ansprechverhalten des Fahrzeugs verbessert, aber den Antriebsstrang dafür häufig nicht im Bereich des maximalen Wirkungsgrads betreibt. Beim beschriebenen Verfahren erfolgt bei konstanter Fahrpedalstellung ein Gangwechsel stets ohne Änderung des Abtriebsmoments.

Aus der EP-A 230 735 ist eine Abtriebssteuerung bekannt, bei der während des Gangwechsels die Abtriebskraft konstant gehalten wird. Mittels einer zweiten Drosselklappe wird erreicht, daß die abgegebene Fahrleistung in etwa konstant bleibt und so ein Rucken während des Gangwechsels vermieden wird, da die Abtriebsleistung des Fahrzeuges vor und nach dem Gangwechsel gleich ist. In Abhängigkeit von der Fahrpedalstellung wird zunächst ein Abtriebsmoment-Sollwert bestimmt, anschließend dann in Abhängigkeit vom Abtriebsmoment-Sollwert ein Gang des Getriebes bestimmt und eingelegt und schließlich das Motormoment derart eingestellt, daß der Abtriebsmoment-Istwert die Größe des Abtriebsmoment-Sollwerts annimmt.

Erfindungsgemäß wird nun gemäß dem Hauptanspruch vorgeschlagen, zur Bestimmung des Abtriebsmomentsollwertes nicht nur die Fahrpedalstellung sondern auch die Abtriebsdrehzahl bzw. einer von dieser abgeleiteten Größe, insbesondere die Fahrgeschwindigkeit, zur Bestimmung des Abtriebsmomentsollwertes zu verwenden. Hierdurch wird erreicht, daß auch bei höheren Gängen das Fahrpedal entsprechend weite Wege zurücklegen kann, so daß es dem Fahrer möglich ist, Geschwindigkeitsänderungen des Fahrzeuges dosiert vorzunehmen. In Abhängigkeit von der Abtriebsdrehzahl bzw. der Fahrgeschwindigkeit wird nämlich erreicht, daß berücksichtigt wird, daß insbesondere bei hohen Drehzahlen bzw. Fahrgeschwindigkeiten eine stärkere Leistungserhöhung notwendig ist, um die augenblickliche Fahrgeschwindigkeit zu erhöhen, während bei niederen Drehzahlen üblicherweise durch einen geringeren Leistungszuwachs bereits eine erhebliche Steigerung der Geschwindigkeit bewirkt wird. Durch die erfindungsgemäße Maßnahme wird daher erreicht, daß nunmehr eine feinfühlige Verstellung der Geschwindigkeit des Fahrzeuges ermöglicht wird.

In Abhängigkeit von dem berechneten Abtriebsmoment-Sollwert und der Abtriebsdrehzahl beziehungsweise einer dieser entsprechenden Größe wird dann ein optimaler Gang für das Automatik-Getriebe berechnet. Ist das Getriebe in den optimalen Gang gebracht, sofern eine Abweichung zum gerade eingelegten Gang besteht und keine Randbedingungen, wie zum Beispiel die Einhaltung einer Schalthysterese, einzuhalten sind, so wird aus dem eingelegten Gang, der Abtriebsdrehzahl (beziehungsweise einer dieser entsprechenden Größe) und dem Abtriebsmoment-Sollwert ein erforderlicher Motormoment-Sollwert berechnet.

Aus dem so bestimmten Motormoment-Sollwert und der Motordrehzahl wird dann ein DrosselklappenwinkelSollwert (beziehungsweise ein entsprechender Wert, beispielsweise die Einspritzmenge beim Dieselmotor) berechnet.

Der Drosselklappenwinkel-Sollwert wird dann einer elektronischen Motorleistungssteuerung (EMS = elektronisch einstellbare Drosselklappe) zugeleitet beziehungsweise von der EMS berechnet. Die elektronische Motorleistungssteuerung stellt dann den zugehörigen Drosselklappenwinkel ein.

Die vorstehend genannten Berechnungen werden vorzugsweise in kurzen Zeitabständen stets neu durchgeführt, so daß bei sich ändernden Bedingungen eine Anpassung erfolgt.

Die Erfindung wird im folgenden anhand der Figuren näher erläutert. Es zeigen:

Figur 1      ein Blockschaltbild, das das erfindungsgemäße Verfahren verdeutlicht,

Figur 2      ein Diagramm des Abtriebsmoments in Abhängigkeit von der Zeit bei einem Gangwechsel vom vierten Gang in den dritten Gang eines automatischen Getriebes,

Figur 3      ein Diagramm des Abtriebsmoments in Abhängigkeit von der Fahrpedalstellung unter Berücksichtigung eines Gangwechsels und zwar vom vierten in den dritten und vom dritten in den zweiten Gang und

Figur 4      zeigt ein weiteres Blockschaltbild.

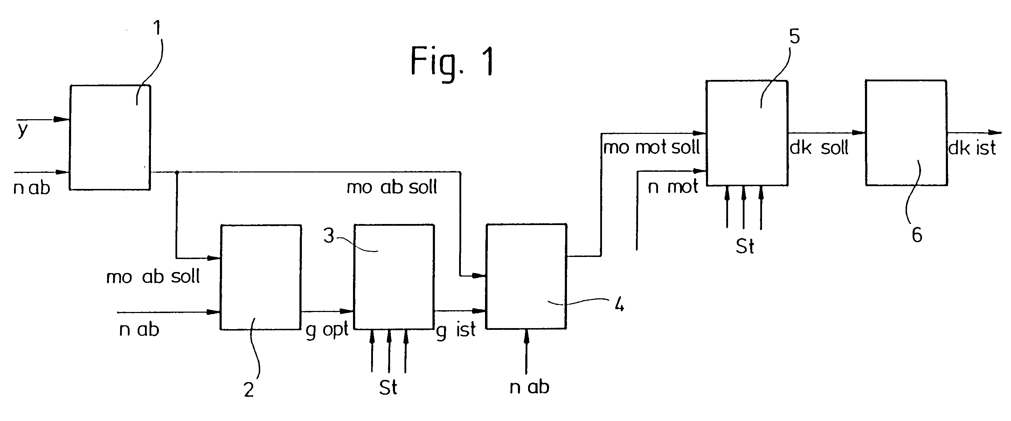

Die Figur 1 zeigt ein Blockschaltbild, das das erfindungsgemäße Verfahren verdeutlicht. Einer Einrichtung 1 wird die Fahrpedalstellung y zugeführt. Hierzu kann das Fahrpedal eines nicht dargestellten Fahrzeugs mit einem Geber verbunden sein, der Daten über die Fahrpedalstellung liefert. Diese Daten werden als Eingangsgröße der bereits genannten Einrichtung 1 zugeführt. Ferner erhält die Einrichtung 1 Informationen über die Abtriebsdrehzahl n ab. Bei der Abtriebsdrehzahl n ab handelt es sich um die Drehzahl einer Ausgangswelle eines automatischen Getriebes, das mit einer Brennkraftmaschine des Fahrzeugs in Verbindung steht. Anstelle der Abtriebsdrehzahl n ab kann der Einrichtung 1 auch die Fahrzeuggeschwindigkeit zugeführt werden. Die Fahrzeuggeschwindgkeit ist proportional der Abtriebsdrehzahl n ab. Die Einrichtung 1 ist vorzugsweise als elektronische Schaltung ausgebildet, die in kurzen Zeitabständen die beiden Eingangsgrößen (Fahrpedalstellung y und Abtriebsdrehzahl n ab) in eine Ausgangsgröße umrechnet. Bei der Ausgangsgröße handelt es sich um einen Abtriebsmoment-Sollwert mo ab soll. Eine sich zyklisch wiederholende Berechnung wird auch bei den nachstehend erwähnten Einrichtungen durchgeführt.

Der Abtriebsmoment-Sollwert mo ab soll wird einer weiteren Einrichtung 2 zugeführt, die vorzugsweise als Kennfeld ausgebildet ist. Als weitere Eingangsgröße erhält die Einrichtung 2 ebenfalls die Abtriebsdrehzahl n ab. Für jeden durch die Abtriebsdrehzahl n ab und den Abtriebsmoment-Sollwert mo ab soll Wert wird nach bestimmten Optimierungskriterien ein optimaler Gang g opt errechnet. Dieser steht als Ausgangsgröße der Einrichtung 2 zur Verfügung und wird einer Einrichtung 3 zugeleitet. Bei der Einrichtung 3 handelt es sich vorzugsweise wiederum um ein Kennfeld. Dies erhält neben der Information des optimalen Ganges g opt als weitere Eingangsgrößen Störgrößen St. Die Störgrößen St sind als Größen zur Berücksichtigung weiterer Parameter aufzufassen, zum Beispiel können sie Randbedingungen festlegen. Eine Randbedingung kann zum Beispiel eine Einhaltung einer Schalthysterese sein. Weicht der von der Einrichtung 2 errechnete optimale Gang g opt von dem gerade eingelegten Gang g ist des automatischen Schaltgetriebes ab, so schaltet die Getriebesteuerung zum Beispiel unter Berücksichtigung der bereits erwähnten Schalthysterese in den opitmalen Gang g opt. Am Ausgang der Einrichtung 3 steht dann eine entsprechende Information zur Verfügung. Diese Information wird zusammen mit dem Abtriebsmoment-Sollwert mo ab soll einer Einrichtung 4 zugeleitet. Ferner ist an die Einrichtung 4 als weitere Eingangsgröße die Abtriebsdrehzahl n ab angeschlossen. Die Einrichtung 4 errechnet einen Motormoment-Sollwert Mo mo soll, das heißt, hier wird ein Sollwert für das Moment der Brennkraftmaschine vorgegeben. Dieser Sollwert wird an eine Einrichtung 5 als Eingangsgröße geleitet. Die Einrichtung 5 erhält als weitere Eingangsgröße die Motordrehzahl n mot. Ferner sind auch dort Störgrößen St berücksichtigt. Am Ausgang steht ein Drosselklappenwinkel-Sollwert dk soll zur Verfügung. Dieser Drosselklappenwinkel-Sollwert dk soll führt schließlich in der Einrichtung 6, die vorzugsweise als elektronische Motorleistungssteuerung (EMS = elektronisch einstellbare Drosselklappe) ausgebildet ist, zu einem an der Brennkraftmaschine tatsächlichen eingestellten Drosselklappenwinkel dk ist.

Im Betrieb ergibt sich folgende Funktionsweise:

In kurzen Intervallen (zum Beispiel in einigen ms) wird aus der jeweiligen Fahrtpedalstellung y und der Abtriebsdrehzahl n ab und gegebenenfalls weiteren, hier nicht dargestellten Parametern der Abtriebsmoment-Sollwert mo ab soll errechnet. Dies erfolgt in der erwähnten Einrichtung 1. Die Einrichtung 2 (Kennfeld) liefert den optimalen Gang g opt nach dem Kennfeld

$$g \; opt \; (mo \; ab \; soll, \; n \; ab).$$

Ebenfalls in Intervallen von einigen ms wird anhand des Kennfelds (Einrichtung 4)

$$mo \; mot \; (g \; ist, \; mo \; ab \; soll, \; n \; ab)$$

der Motormoment-Sollwert mo mot soll ermittelt.

Die Beschleunigung des Fahrzeugs ist im wesentlichen durch die Fahrwiderstände, Bremskräfte und das Abtriebsmoment mo ab des Getriebes bestimmt. Das Abtriebsmoment mo ab ergibt sich als Produkt des Motormoments mo mot (abzüglich Nebenleistungen) und der Drehmoment-Übersetzung um get des automatischen Getriebes (inklusive Reibungsverluste und Einfluß des Drehmomentwandlers). Insofern gilt die Beziehung

$$mo \; ab \; = \; mo \; mot \cdot um \; get.$$

Die Kennfeldwerte der Einrichtung 4 sind so vorgegeben, daß das Produkt

$$mo \; mot \; (g \; ist, \; mo \; ab \; soll, \; n \; ab) \cdot um \; get \; (g \; ist, \; mo \; ab \; soll, \; n \; ab) \; = \; mo \; ab \; soll$$

ist, also dem Abtriebsmoment-Sollwert mo ab soll entspricht.

Bei der Realisation können die Einrichtungen 5 und 6 der Figur 1 in einer elektronischen Motorleistungssteuerung zusammengefaßt sein. Diese berechnet nun anhand des ermittelten Motormoment-Sollwerts mo mot soll und der Motordrehzahl n mot sowie der erwähnten Störgrößen St über ein Kennfeld

$$dk \; (mo \; mot, \; n \; mot)$$

den zum Aufbau des geforderten Motormoments mo mot soll erforderlichen Drosselklappenwinkel dk ist und stellt diesen ein.

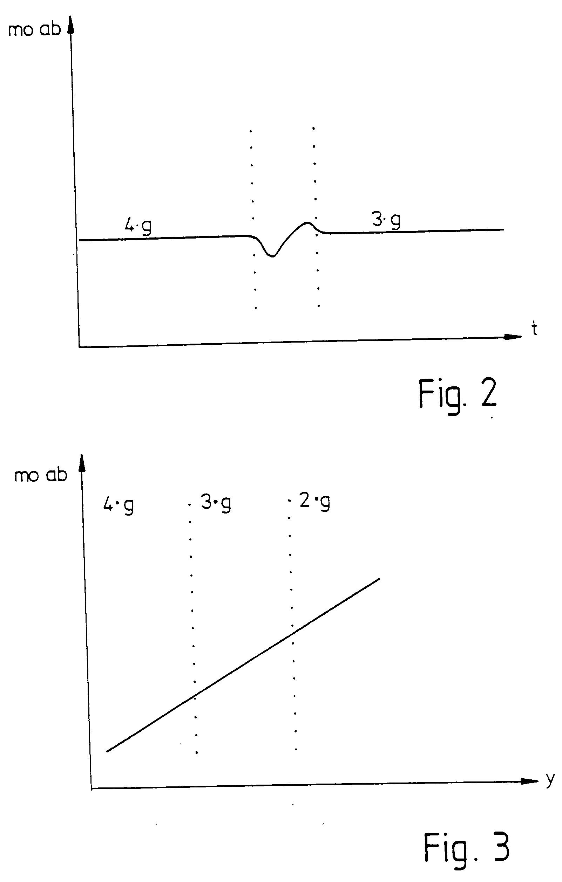

Aufgrund des erfindungsgemäßen Verfahrens stellt sich der in der Figur 2 dargestellte Kennlinienverlauf ein. Das Diagramm der Figur 2 zeigt die Abhängigkeit des Abtriebsmoment mo ab von der Zeit t und zwar bei einem Gangwechsel des Getriebes vom vierten Gang 4.g in den dritten Gang 3.g. Es wird deutlich, daß lediglich in der Schaltphase geringe Überschwinger vorliegen, jedoch vor und nach dem Schalten das gleiche Abtriebsmoment mo ab zur Verfügung steht. Hierbei ist vorausgesetzt, daß der Fahrer des Fahrzeugs das Fahrpedal in konstanter Stellung hält.

Betrachtet man die Figur 3, so ist dort das Abtriebsmoment mo ab in Funktion der Fahrpedalstellung y wiedergegeben. Es wird ein Bereich gezeigt, der die Gänge 4, 3 und 2 des automatischen Getriebes betrifft. Mit Veränderung der Fahrpedalstellung y, das heißt, mit kontinuierlich erfolgendem Niedertreten des Fahrpedals vergrößert sich das Abtriebsmoment mo ab ebenfalls kontinuierlich. In diesem Ausführungsbeispiel ist der Zusammenhang zwischen Fahrpedal und Abtriebsmoment als lineare Funktion (Gerade) ausgebildet. Zur Erzielung einer gewünschten Pedalcharakteristik kann der Zusammenhang jedoch auch durch eine nichtlineare Kennlinie hergestellt werden. Die Besonderheit ist, daß trotz des Schaltens des Getriebes keine Drehmomentsprünge auftreten.

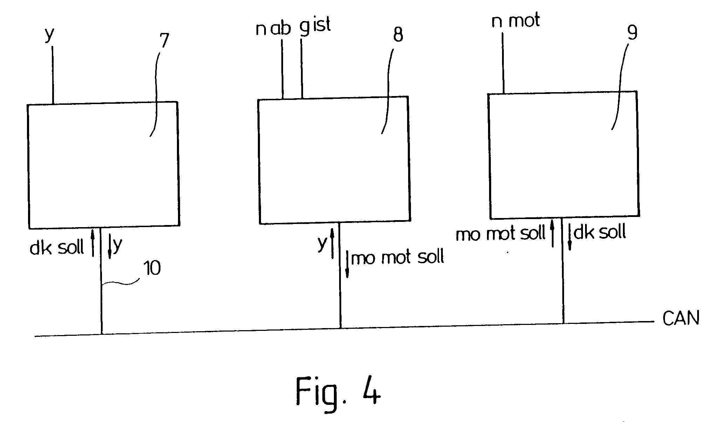

Das zuvor beschriebene wird im Blockschaltbild der Figur 4 nochmals näher verdeutlicht. Hier ist eine denkbare, bevorzugte Aufteilung der zuvor beschriebenen logischen Funktionen auf vorhandene Steuergeräte verdeutlicht. Es sind jedoch auch andere Aufteilungen denkbar. Dieses weist einen Datenbus CAN auf, das heißt, die gesamten Dateninformationen für die Einrichtungen des Fahrzeugs werden über den Datenbus CAN geleitet. An den Datenbus CAN ist eine elektronische Motorleistungssteuerung 7, ein Getriebe-Steuergerät 8 und ein Motorsteuergerät 9 angeschlossen. Als Eingangsgröße erhält die elektronische Motorleistungssteuerung 7 die Fahrpedalstellung y. An der Schnittstelle 10 der elektronischen Motorleistungssteuerung 7 steht die Fahrpedalstellung y in digitalisierter Form zur Verfügung. Ebenfalls über die Schnittstelle 10 empfängt das Gerät 7 einen Sollwert für die Drosselklappe dk soll.

Das Getriebe-Steuergerät 8 erhält als Eingangsgrößen die Abtriebsdrehzahl n ab und den eingelegten Gang g ist. Über den Datenbus CAN wird die Fahrpedalstellung y zugeführt. Als Ausgangsgröße stellt das Steuergerät 8 über den Datenbus einen Sollwert für das Motordrehmoment mo mot soll zur Verfügung. Letzterer wird auch dem Motorsteuergerät 9 zugeleitet. Ferner erhält das Motorsteuergerät 9 als Eingangsgröße die Motordrehzahl n mot. Das Motorsteuergerät 9 berechnet aus den ihm zur Verfügung stehenden Informationen einen Drosselklappenwinkel-Sollwert dk soll, der über den CAN-Bus dem Motorleistungssteuergerät 7 zugeleitet wird.

Das erfindungsgemäße Verfahren ermöglicht es, daß das Motormoment mo mot unabhängig vom gerade eingelegten Gang (und sonstigen, möglicherweise noch zu berücksichtigten Größen) derart eingestellt wird, daß der durch die Fahrpedalstellung vorgegebene Sollwert für das Abtriebsmoment mo ab stets eingehalten wird, sofern das verfügbare maximale Motormoment mo mot ausreicht.

Nach einem weiteren Ausführungsbeispiel der Erfindung ist es auch möglich, daß das Verfahren nicht bei Motoren realisiert wird, bei denen das Drehmoment über eine elektronisch einstellbare Drosselklappe gesteuert wird, sondern über andere Steller regelbar ist, zum Beispiel eine EDC (electronic diesel control) beim Dieselmotor oder bei einer Einlaßventilsteuerung.

Ferner kann bei der Ermittlung des Motormoment-Sollwerts die Getriebetemperatur mit berücksichtigt werden, um temperaturabhängige Verluste in der Drehmoment-Übersetzung zu kompensieren.

Es kann auch eine weitere Variante vorgesehen sein, bei der zur Ermittlung des erforderlichen Drosselklappenwinkels dk ist außer dem Motormoment-Sollwert mo mot soll und der Motordrehzahl n mot auch die Motortemperatur und/oder die Ansauglufttemperatur und/oder der Luftdruck berücksichtigt werden (Kompensation von Störgrößen für das Motormoment mo mot). Schließlich ist auch eine Ausführungsform möglich, bei der aus dem Abtriebsmoment-Sollwert mo ab soll und dem Gang g ist unter Umgehung der Zwischengröße Motormoment-Sollwert mo mot soll direkt ein Drosselklappenwinkel-Sollwert dk soll berechnet wird.

Denkbar ist auch eine beliebige Kombination der genannten Varianten.


**Patentansprüche**

1.  Verfahren zum Betreiben einer aus Brennkraftmaschine und automatischem Getriebe bestehenden Antriebseinheit, insbesondere für Kraftfahrzeuge, bei dem in Abhängigkeit von mehreren Parametern aufgrund eines eingelegten Gangs des Getriebes ein Abtriebsmoment (mo ab) am Ausgang des Getriebes zur Verfügung gestellt wird, wobei in Abhängigkeit der einen Parameter bildenden Fahrpedalstellung (y) das Abtriebsmoment (mo ab) unabhängig vom eingelegten Gang (g ist) vorgegeben wird, dadurch gekennzeichnet, daß als weiterer Parameter die Abtriebsdrehzahl (n ab) beziehungsweise eine dieser entsprechenden Größe hinzugenommen wird und der Abtriebsmoment-Sollwert (mo ab soll) aus der Fahrpedalstellung (y) und der Abtriebsdrehzahl (n ab) berechnet wird.

2.  Verfahren nach Anspruch 1, dadurch gekennzeichnet, daß in Abhängigkeit vom Antriebsmoment-Sollwert (mo ab soll) ein Gang (g opt) des Getriebes bestimmt und eingelegt wird, und daß anschließend das Motormoment (mo mot) derart eingestellt wird, daß der Abtriebsmoment-Istwert (mo ab ist) die Größe des Abtriebsmoment-Sollwerts (mo ab soll) annimmt.

3.  Verfahren nach einem der vorhergehenden Ansprüche, dadurch gekennzeichnet, daß das Getriebe in den optimalen Gang (g opt) verbracht wird, sofern eine vorgegebene Abweichung zum gerade eingelegten Gang (g ist) besteht.

4.  Verfahren nach einem der vorhergehenden Ansprüche, dadurch gekennzeichnet, daß aus dem eingelegten Gang (g ist), der Abtriebsdrehzahl (n ab) und dem Abtriebsmoment-Sollwert (mo ab soll) ein erforderlicher Motormoment-Sollwert (mo mot soll) berechnet wird.

5.  Verfahren nach einem der vorhergehenden Ansprüche, dadurch gekennzeichnet, daß aus dem Motormoment-Sollwert (mo mot soll) und der Motordrehzahl (n mot) ein Drosselklappenwinkel-Sollwert (dk soll) beziehungsweise ein diesem entsprechender Wert berechnet wird.

6.  Verfahren nach Anspruch 5, dadurch gekennzeichnet, daß der Drosselklappenwinkel-Sollwert (dk soll) bzw. ein diesem entsprechender Wert unter Berücksichtigung der Motortemperatur und/oder der Ansauglufttemperatur und/oder des Luftdrucks bestimmt wird.

**Claims**

1. Method for operating a drive unit consisting of an internal combustion engine and an automatic gearbox, in particular for motor vehicles, in which a drive torque (mo ab) is made available at the output of the gearbox on the basis of a gear which has been selected and as a function of a plurality of parameters, the drive torque (mo ab) being specified independent of the gear selected (g ist) as a function of the accelerator position (y), which forms one parameter, characterized in that the output rotational speed (n ab) or a quantity corresponding to the latter, is added as a further parameter and the output torque required value (mo ab soll) is calculated from the accelerator position (y) and the output rotational speed (n ab).

2. Method according to Claim 1, characterized in that a gear (g opt) is determined and selected as a function of the output torque required value (mo ab soll), and in that the engine torque (mo mot) is subsequently set in such a way that the output torque actual value (mo ab ist) takes on the magnitude of the output torque required value (mo ab soll).

3. Method according to one of the preceding claims, characterized in that the gearbox is brought into the optimum gear (g opt) if a specified deviation from the gear just selected (g ist) is present.

4. Method according to one of the preceding claims, characterized in that an engine torque required value (mo mot soll) is calculated from the gear selected (g ist), the output rotational speed (n ab) and the output torque required value (mo ab soll).

5. Method according to one of the preceding claims, characterized in that a throttle butterfly angle required value (dk soll), or a value corresponding to the latter, is calculated from the engine torque required value (mo mot soll) and the engine rotational speed (n mot).

6. Method according to Claim 5, characterized in that the throttle butterfly angle required value (dk soll), or a value corresponding to the latter, is determined which takes account of the engine temperature and/or the induction air temperature and/or the air pressure.


**Revendications**

1. Procédé pour l'exploitation de l'unité d'entraînement constitué par un moteur à combustion interne et une boîte de vitesses automatique, notamment pour véhicules automobiles, unité dans laquelle, en fonction de plusieurs paramètres, un couple de sortie (mo ab) est rendu disponible à la sortie de la boîte de vitesses sur la base d'un rapport de vitesses engagé de la boîte de vitesses, le couple de sortie (mo ab) étant prédéfini indépendamment du rapport de vitesses engagé (g ist) en fonction de la position (y) de la pédale d'accélérateur constituant un paramètre, procédé caractérisé en ce que comme autre paramètre, la vitesse de rotation de sortie (n ab) ou une grandeur correspondante à celle-ci, est introduite et la valeur de consigne (mo ab soll) du couple de sortie est calculée à partir de la position (y) et de la vitesse de rotation de sortie (n ab).

2. Procédé selon la revendication 1, caractérisé en ce que, en fonction de la valeur de consigne (mo ab soll) du couple d'entraînement, un rapport de vitesses (g opt) de la boîte de vitesses est déterminé et engagé, et en ce que, ensuite, le couple moteur (mo mot) est réglé de façon que la valeur réelle (mo ab ist) du couple de sortie ait la grandeur de la valeur de consigne (mo ab soll) du couple de sortie.

3. Procédé selon l'une des revendications précédentes caractérisé en ce que la boîte de vitesses est amenée au rapport de vitesses optimal (g opt) dans la mesure où un écart prédéfini existe par rapport au rapport de vitesses précisément engagé (g ist).

4. Procédé selon l'une des revendications précédentes caractérisé en ce que, à partir du rapport de vitesses engagé (g ist) de la vitesse de rotation de sortie (n ab) et de la valeur de consigne (mo mot soll) du couple de sortie, une valeur de consigne (mo mot soll) du couple moteur nécessaire est calculée.

5. Procédé selon l'une des revendications précédentes caractérisé en ce qu'à partir de la valeur de consigne (mo mot soll) du couple moteur et de la vitesse de rotation (n mot) du moteur, une valeur de consigne (dk soll) de l'angle du clapet d'étranglement, ou bien une valeur correspondante à celle-ci est calculée.

6. Procédé selon la revendication 5, caractérisé en ce que la valeur de consigne (dk soll) de l'angle du clapet d'étranglement, ou bien une valeur correspondante à celle-ci, est déterminée en tenant compte de la température du moteur et/ou de la température de l'air aspiré et/ou de la pression d'air.

Fig. 1

EP 0 557 299 B1

mo ab

4·g                    3·g

t

## Fig. 2

mo ab

4·g        3·g        2·g

y

## Fig. 3

Fig. 4